# EUROPEAN PATENT APPLICATION

(11) **EP 4 686 649 A1**
(43) Date of publication of application: **04.02.2026**
(21) Application number: 25186199.3
(22) Date of filing: 15.07.2025
(51) Int. Cl.: B64C 1/40, B64C 3/56

(54) **WING ASSEMBLY**

(30) Priority: 29.07.2024 GB 202411053
(71) Applicant: Airbus Operations Limited, Bristol BS34 7PA (GB)
(72) Inventor: FRANKS, Declan, Bristol, BS34 7PA (GB); CLOUGH, James, Bristol, BS34 7PA (GB); RUIZ DE PABLO, Javier, Bristol, BS34 7PA (GB)
(74) Representative: Farrow, James Anthony

(57) **Abstract**

Disclosed is a wing assembly for an aircraft. The wing assembly comprises a fixed wing, a wing tip device, a wiring harness and a harness guide. The wing tip device is moveably mounted at a joint at an end of the fixed wing. The wing tip device is moveable about the joint between: (i) a flight configuration for use during flight, and (ii) a ground configuration for use during ground-based operations, in which ground configuration the wing tip device is moved relative to the fixed wing such that the span of the wing is reduced. The wiring harness extends between the fixed wing and the wing tip device. The wiring harness comprises a plurality of conductors and is arranged to transmit electrical power and/or data to the wing tip device. The harness guide is located between the fixed wing and the wing tip device. The harness guide comprises a helical channel configured to receive the wiring harness and guide the wiring harness between the fixed wing and the wing tip device.

## Description

### TECHNICAL FIELD

The present invention relates to an aircraft comprising a fixed wing and a moveable wing tip device, with a wiring harness extending from the fixed wing into the wing tip device. The present disclosure also concerns a wing assembly comprising a harness guide for the wiring harness.

### BACKGROUND

There is a trend towards increasingly higher aspect ratio wings for large passenger aircraft, for which it is desirable to have correspondingly large wingspans. However, the maximum aircraft span is effectively limited by airport operating rules which govern various cleanses required when manoeuvering around the airport (such as the span and/or ground clearance required for gate entry and taxiway usage).

Therefore, movable wing tip devices have been introduced into passenger aircraft, where a wing tip device is movable between a flight configuration for use during flight, and a ground configuration for use during ground-based operations. In the flight configuration, the wing tip device forms an extension of the wing and contributes to the lift generated by the wing. In the ground configuration, the wing tip device is moved away from the flight configuration such that the span of the aircraft wing is reduced, thereby allowing use of existing gates and taxiways. Such an arrangement is sometimes referred to as a "folding wing tip".

It is desirable to transfer power and/or data into a folding wing tip. In most parts of an aircraft, power and data can be readily provided via a suitable electrical wiring. This is typically provided in a wiring harness (also referred to as a cable harness, or wiring loom). However, in the context of a folding wing tip there are several challenges. Firstly, the wiring harness must extend across a joint and therefore be arranged to cope with repeated exposure to potentially harsh environmental conditions, with movement, and/or with changes in tensional loads. Secondly, there tends to be relatively little available volume within the aircraft structure towards the tip of the wing. The ability to incorporate a degree of slack in the wiring harness may therefore be restricted.

### SUMMARY

According to a first aspect of the present invention, there is provided a wing assembly for an aircraft, the wing assembly comprising: a fixed wing; a wing tip device moveably mounted at a joint at an end of the fixed wing, the wing tip device being moveable about the joint between: (i) a flight configuration for use during flight, and (ii) a ground configuration for use during ground-based operations, in which ground configuration the wing tip device is moved relative to the fixed wing such that the span of the wing is reduced, a wiring harness extending between the fixed wing and the wing tip device, the wiring harness comprising a plurality of conductors and being arranged to transmit electrical power and/or data to the wing tip device; and a harness guide located between the fixed wing and the wing tip device, the harness guide comprising a helical channel configured to receive the wiring harness and guide the wiring harness between the fixed wing and the wing tip device.

The harness guide may be positioned such that a longitudinal axis of the harness guide is coaxial with the joint. This may allow all rotation between the fixed wing and the wing tip device to be about the joint. This may reduce the likelihood of parts of the wing assembly interfering with each other during movement of the wing tip device relative to the fixed wing.

The harness guide is positioned such that a longitudinal axis of the harness guide is offset from the joint. As the harness guide is located away from the joint, the harness guide does not have to be located at the joint. As such, this may allow the harness guide to be installed in a location with a greater availability of space, which may improve the ease of installation and packaging of the harness guide within the wing assembly.

The harness guide may comprise a plastic, such as an engineering plastic. The harness guide may be resilient to temperature fluctuations and may be able to withstand harsh environmental conditions experienced during flight. The harness guide may also help to prevent arcing caused by high voltage in the wiring harness. The harness guide may comprise a metallic material. This may allow the harness guide to provide EMI protection to the wiring harness. The harness guide may be 3D printed, injection moulded or machined.

The harness guide may be fixed in position relative to the fixed wing or the harness guide may be fixed in position relative to the wing tip device. This may allow a common reference frame to exist between the harness guide and one of the fixed wing and the wing tip device. This may help by reducing the number of parts of the wing assembly that move during rotation of the wing tip device.

The harness guide may be moveable relative to both the fixed wing and the wing tip device. This may allow the harness guide to rotate independently of any movement of the wing tip relative to the fixed wing.

The harness guide may rotate about the longitudinal axis of the harness guide. This may allow the harness guide to rotate to accommodate movement of the wiring harness during movement of the wing tip device relative to the fixed wing.

The helical channel may extend around an outer circumferential surface of the harness guide. The helical channel may have a width of between approximately 8mm and 30mm, such as between approximately 12mm and 25mm, or between approximately 15mm and 20mm. This may allow the wiring harness to fit within the helical channel. The helical channel may have a width substantially equal to the cross-sectional diameter of the wiring harness. This may allow the wiring harness to fit snugly within the helical channel.

The helical channel may comprise a helix angle of between approximately 4 degrees and 18 degrees, such as between 8 degrees and 12 degrees. This may allow the wiring harness to wrap around the harness guide without putting undue stress on the wiring harness.

The helical channel may be a right-handed helical channel. The helical channel may be a left-handed helical channel.

The helical channel may have a substantially constant cross-sectional shape. This may help to ensure that the wiring harness fits within the helical channel along the entire length of the helical channel. This may help to reduce the likelihood of the wiring harness becoming stuck in the helical channel.

The helical channel may extend for a single revolution around the outer circumferential surface of the harness guide. The helical channel may extend for more than one revolution, such as two or three revolutions, around the outer circumferential surface of the harness guide. The harness guide may comprise multiple helical channels that extend around the outer circumferential surface of the harness guide, such as two or three channels. The multiple channels may all have the same helix angle and may be parallel and/or adjacent to one another.

An outer radius of the harness guide may be approximately six times the cross-sectional diameter of the wiring harness. This may allow the wiring harness to wrap around the harness guide without applying excessive strain to the wiring harness from over-bending.

The outer radius of the harness guide may be equal to or less than approximately six times the cross-sectional diameter of the wiring harness. The outer radius of the harness guide may be equal to or less than three times the cross-sectional diameter of the wiring harness.

The harness guide may be arranged at a leading edge side of the wing and/or a trailing edge side of the wing. When the harness guide is provided at both the leading edge side and the trailing edge side, this may provide redundancy. The harness guide may be arranged in a wingbox area of the wing.

The harness guide may comprise a retaining element to at least partially retain the harness within the helical groove. This may help to reduce the likelihood of the wiring harness slipping out of the helical groove when the wing tip device moves relative to the fixed wing.

The retaining element may comprise a protrusion configured to engage with a corresponding recess in the harness guide. The retaining element may comprise a base and two arms extending perpendicular to the base. Each arm may comprise a protrusion to engage with a corresponding recess of the harness guide. This may allow the retaining element to be easily installed and replaced if needed. The retaining element may comprise two protrusions, each protrusion configured to engage with a different recess in the harness guide.

The retaining element may comprise a bolt, a nut configured to engage with the bolt and a spacing element through which the bolt extends. The spacing element may be configured to engage in a friction fit with the harness guide. The spacing element may comprise at least one of rubber or fluorosilicone. The spacing element may comprise a softer material than the wiring harness such that if the wiring harness rubs against the spacing element, the chance of damaging the wiring harness may be reduced

The retaining element may comprise a plurality of elongate members that extend around the harness guide. The retaining element may form a cage around the harness guide. The cage may cover at least two sides of the harness guide. This may allow multiple parts of the outer circumferential surface of the harness guide to be covered by a single retaining element. This may help to equally retain the wiring harness within the helical channel.

The retaining element may comprise an insert comprising at least one of rubber or fluorosilicone. The insert may comprise a softer material than the wiring harness such that if the wiring harness rubs against the insert, the chance of damaging the wiring harness may be reduced.

The wiring harness may be configured to transfer high-voltage power. This may allow high-voltage devices to be located on the wing tip device.

According to a second aspect of the present invention, there is provided an aircraft comprising the aircraft wing assembly according to the first aspect.

### BRIEF DESCRIPTION OF THE DRAWINGS

Embodiments of the invention will now be described, by way of example only, with reference to the accompanying drawings, in which:
Figure 1 shows a schematic plan view of an aircraft;
Figure 2 shows a schematic partial front view of the aircraft of Figure 1;
Figures 3 and 4 show schematic views of a wing assembly;
Figure 5 is shows a schematic isometric view of a harness guide;
Figure 6 shows a schematic view of the harness guide with the wiring harness of Figure 5;
Figures 7 and 8 show schematic views of a further wing assembly;
Figures 9 to 12 show schematic views of example retaining elements for the harness guide; and
Figures 13 and 14 show schematic views of an alternative harness guide.

### DETAILED DESCRIPTION

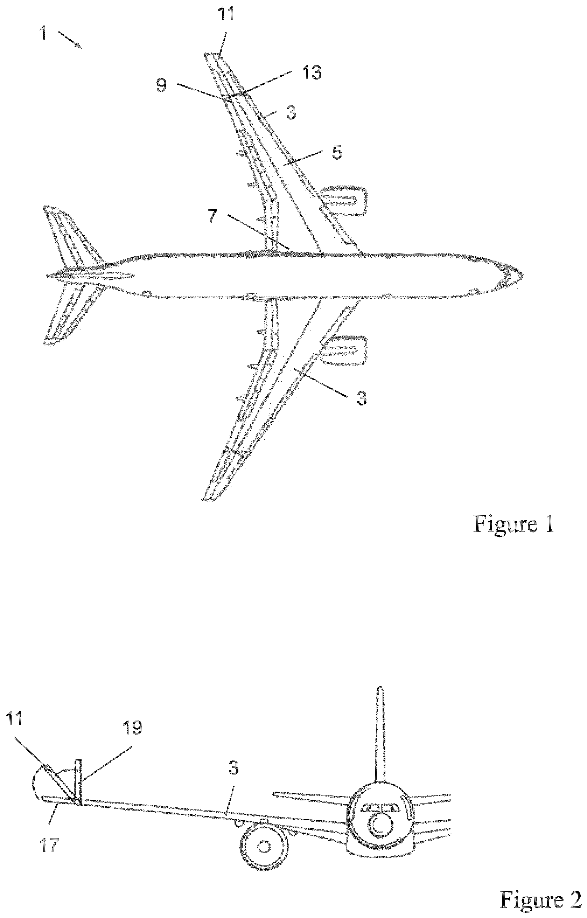

Referring first to Figures 1 and 2, these figures show a plan view and a front view of an aircraft 1 according to a first embodiment. The aircraft 1 comprises two main wings 3 extending outwardly from the fuselage (one wing is not fully visible in Figure 2). Each wing 3 comprises a fixed wing 5 extending from the root 7 to the tip 9. At the tip 9 of the fixed wing 5, the wing 3 also comprises a moveable wing tip device 11. In this embodiment, the wing tip device 11 comprises a planar wing tip extension. The wing tip device 11 is rotatably mounted on a hinge joint 13, having a hinge axis. As such, the wing tip device 11 is able to rotate about the hinge joint 13 relative to the fixed wing 5.

The aircraft 1 also comprises an actuator assembly (not shown) operable to rotate the wing tip device 7 about the hinge joint 13. Referring to Figure 2, the wing tip device 11 is rotatable about the hinge joint 13 between a flight configuration 17, and a ground configuration 19. Figure 2 also shows the wing tip device 11 when moving part-way between these two configurations.

In the flight configuration, the wing tip device 11 is an extension of the fixed wing 5. Accordingly, the upper and lower surfaces of the fixed wing 5 are continuous with the upper and lower surfaces of the wing tip device 11. The leading and trailing edges of the fixed wing 5 are also continuous with the respective leading trailing edges of the wing tip device 11 (see Figure 1). Such an arrangement is beneficial as it provides a relatively large wing span during flight, thereby providing an aerodynamically efficient aircraft.

The wing tip device 11 is rotatable, upwards, from the flight configuration 17 to a ground configuration 19 in which the wing tip device 11 is rotated, to a substantially upright position (shown in Figure 2). The wing tip device 11 is moveable to this configuration when the aircraft 1 is on the ground. Once rotated to such a position, the span of the aircraft 1 is sufficient to meet airport compatibility gate limits. Thus, the aircraft 1 of the first embodiment can have a large span (exceeding gate limits) during flight, but is still able to comply with gate limits when on the ground.

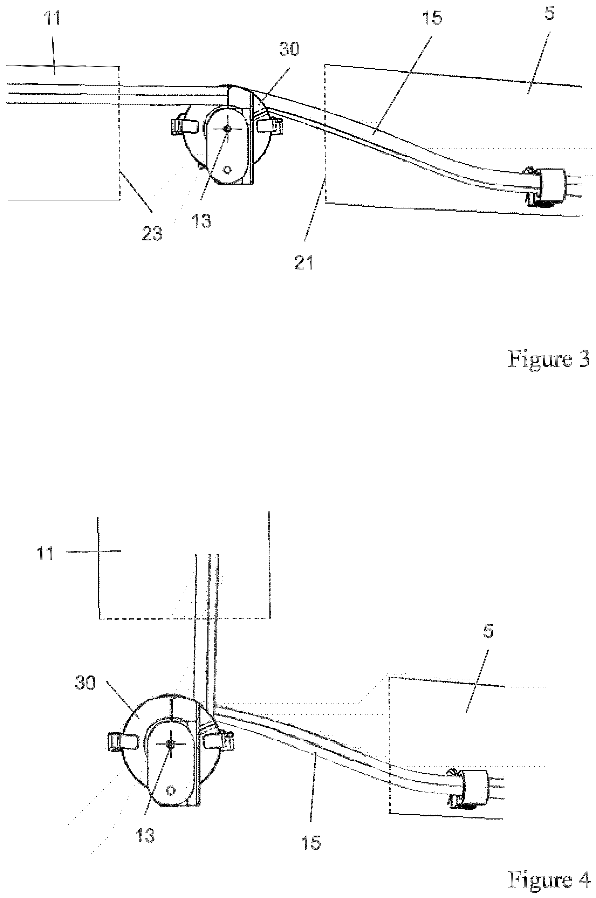

Aspects of the present disclosure relate to routing of wiring harnesses extending from the fixed wing 5 into the wing tip device 11. This will now be described in more detail with reference to Figures 3 to 7.

Figure 3 is a view of the leading edge of the wing 3, at the hinge joint 13 but with some of the wing structure removed for clarity. The wiring harness 15 is located within the inside of the fixed wing, and extends from the fuselage to the tip 9 of the fixed wing 5. The route of the wiring harness 15 is illustrated schematically, although in use the wiring harness 15 itself is mostly hidden by the surrounding structure. The wiring harness 15, as is known in wiring harnesses *per se* in the art, each contain a multiplicity of sheathed electrical cables (not shown individually in the Figures). Each of the electrical cables performs a different function (for example, to supply electrical power to different devices in the aircraft 1, or to transmit data signals to/from sensors and devices in the aircraft 1). The cables are collected together in an assembly to form the wiring harness 15, that is then routed in a suitable manner through the wing 3.

Figure 3 shows the aircraft 1 with the wing tip device 11 in the flight configuration. The wiring harness 15 emerges from the fixed wing at a first end 21, and then crosses the hinge joint 13. A harness guide 30 (as will be described in more detail below) is located at the hinge joint 13. The wiring harness 15 wraps around the harness guide 30 at the hinge joint 13. The harness 15 enters the wing tip device 11 at a second end 23, and then continues into the wing tip device 11 where the cables then connect to a variety of devices and sensors. The harness guide 30 is arranged such that a longitudinal axis of the harness guide 30 is coaxial with the hinge joint 13 and the harness guide 30 is fixed in position relative to the fixed wing 5. As such, when the wing tip device 11 rotates about the hinge joint 13, the harness guide 30 stays in a fixed position relative to the fixed wing 5. In other examples, the harness guide 30 may instead be fixed in position relative to the wing tip device (such that it moves with the wing tip device) or may not be fixed relative to either the fixed wing 5 or the wing tip device 11.

Figure 4 shows the aircraft with the wing tip device 11 in the ground configuration. As can be seen from a comparison with Figure 3, the first end 21, as well as the harness guide 30, remains fixed relative to the fixed wing 5 and the second end 23 remains fixed relative to the wing tip device 11.

Figures 3 and 4 show the leading edge of the wing. However, another wiring harness 15 and a corresponding harness guide 30 are also present at the trailing edge. The arrangement of wiring harnesses 15 at both the leading and trailing edges ensures redundancy should one of the arrangements fail. The arrangement at the leading edge is broadly identical to the arrangement described at the trailing edge (other than any differences discussed herein). For clarity, aspects of the invention are described below with reference to one of the harness guides, but those aspects are equally applicable to the other harness guide unless indicated otherwise.

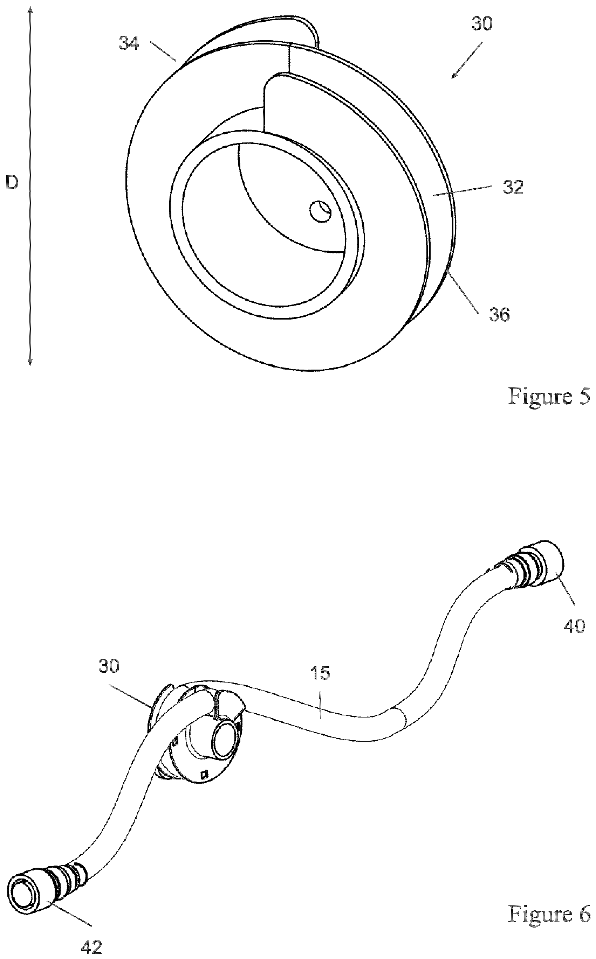

In general terms, placing wiring harnesses 15 across this joint 13 between the fixed wing 5 and the moveable wing tip device 11 presents a number of challenges. The arrangement in the aircraft of the first embodiment seeks to address these challenges by using a harness guide 30 (shown in isolation in Figure 5) positioned between the fixed wing 5 and the wing tip device 11.

Figure 5 shows the harness guide 30 in isolation. The harness guide is made from an engineering plastic and has a substantially circular cross-sectional shape. A helical channel 32 is provided at an outer circumferential surface 34 of the harness guide 30. The helical channel 32 forms a right-handed helix at the outer circumferential surface 34 of the harness guide 30. The helical channel 32 has a width of approximately 8mm, which is fractionally larger than the cross-sectional diameter of the wiring harness 15 to reduce friction between the wiring harness 15 and the harness guide 30 when the wiring harness 15 grows or retracts within the helical channel 32. In some examples, the helical channel 32 may have a width of between approximately 8mm and 30mm. The helical channel 32 has a depth of approximately 13mm, such that the wiring harness 15 is accommodated within the walls 36 of the channel 32. In this way, the walls 36 of the channel 32 cover the wiring harness 15 such that when the wiring harness 15 is in the helical channel 32, the wiring harness 15 does not extend beyond the outer circumferential surface 34 of the harness guide 30. In other examples, the helical channel may have a width of between approximately 13mm and 40mm. The helical channel 32 has a helix angle of approximately 10 degrees.

The harness guide 30 has a radius R of approximately 70mm, which is around six times the diameter of the wiring harness 15 (which is approximately 6mm). In other examples, the harness guide 30 has a radius that is less than 6 times the diameter of the wiring harness 15, such as three times the diameter of the wiring harness 15. In some examples, the harness guide 30 may have a radius of between approximately 70mm and 360mm, while the wiring harness 15 may have a corresponding diameter of between approximately 6mm and 30mm.

Figure 6 shows an isometric view of the harness guide 30 with the wiring harness 15 installed. The wiring harness 15 comprises a first connector 40 to connect to a corresponding connection at the fixed wing 5 and a second connector 42 to connect to a corresponding connector at the wing tip device 11. The wiring harness 15 is removable from the wing assembly to aid repair and replacement of the wiring harness 15 if required.

In use, the wiring harness 15 is fed into the helical channel 32 such that the wiring harness 15 wraps around the harness guide 30. When the wing tip device 11 moves relative to the fixed wing 5, the wiring harness 15 wraps more or less around the harness guide 30. This may help to take up any slack in the wiring harness 15 across the hinge joint 13. This, in turn, may help to reduce the likelihood of the wiring harness 15 getting stuck on, or rubbing against, other parts of the wing assembly.

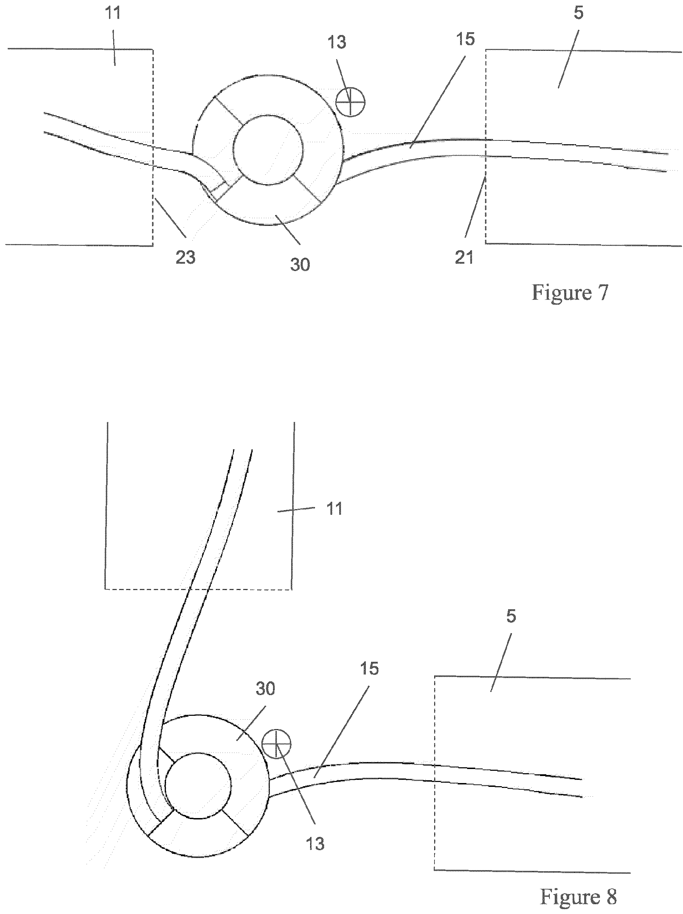

Figures 7 and 8 show an alternative arrangement of the wiring harness 15 and harness guide 30, whereby the helical channel 32 forms a left-handed helix at the outer circumferential surface 34 of the harness guide 30. In this way, the wiring harness 15 wraps around the harness guide 30 in the opposite direction to the arrangement shown in Figures 3 to 6. In the arrangement of Figures 7 and 8, the harness guide 30 is located such that the longitudinal axis of the harness guide 30 is offset from the hinge joint 13. By locating the harness guide 30 offset from the hinge joint 13, this may lead to space saving within the region of the hinge joint 13 by reducing the number of components needing to be aligned with the hinge joint 13..

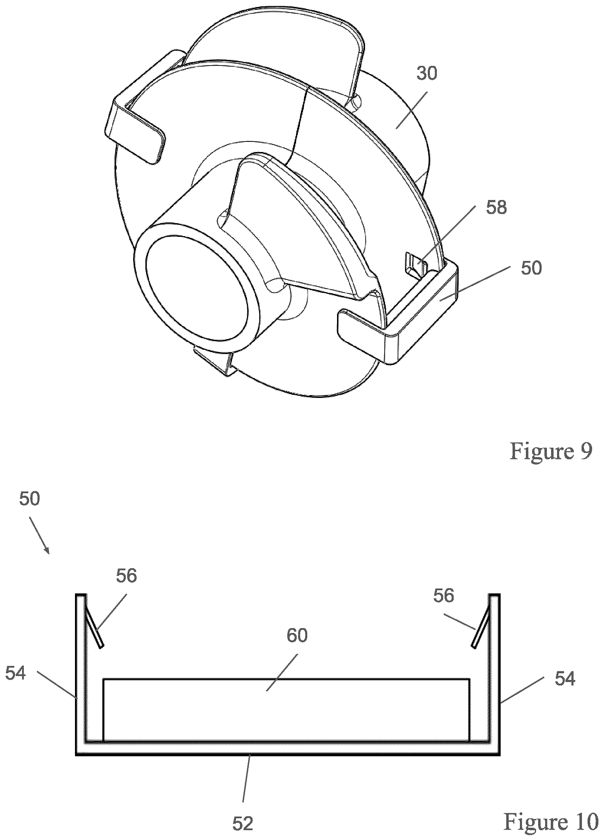

To maintain the wiring harness 15 in the harness guide 30, a retaining element 50 is used. Figures 9 to 12 show different retaining elements 50 that can be used alone or in combination.

Figures 9 and 10 show schematic views of a retaining element 50. The retaining element 50 comprises a so-called "snap and click" device. The retaining element 50 comprises a substantially "C-shaped" cross-sectional shape as shown in Figure 10. The C-shape is formed by a base 52 and two arms 54. The two arms 54 extend perpendicularly to the base 52 at either end of the base 52. Each arm 54 comprises a protrusion 56 that projects away from the respective arm 54 and towards the base 52. The protrusions 56 are configured to engage with corresponding recesses 58 in the harness guide 30 to hold the retaining element 50 on the harness guide 30. The protrusions 56 effectively create a bayonet fitting with the harness guide 30 to make it easier to attach the retaining element 50 to the harness guide 30 than to remove the retaining element 50 from the harness guide 30. To remove the retaining element 50 from the harness guide 30, the protrusions 56 are depressed towards the respective arm 56 from which they project. This disengages the respective protrusion 56 from the respective recess 58 in the harness guide 30, and allows the retaining element 50 to be removed.

The retaining element 50 shown in Figures 9 and 10 further comprises an insert 60 attached to the base 52. The insert 60 comprises fluorosilicone (although in other examples the insert 60 may comprise rubber or another suitable material) and, in use, is configured to face the wiring harness 15 when the wiring harness 15 and the retaining element 50 are installed in the harness guide 30. The insert 60 is softer than the wiring harness 15 such that if the wiring harness 15 rubs against the insert 60, any damage to the wiring harness 15 is minimised. Although three retaining elements 50 are shown in Figure 9, in other examples a greater or lesser number of retaining elements may be used, e.g. one, two, four or five retaining elements 50.

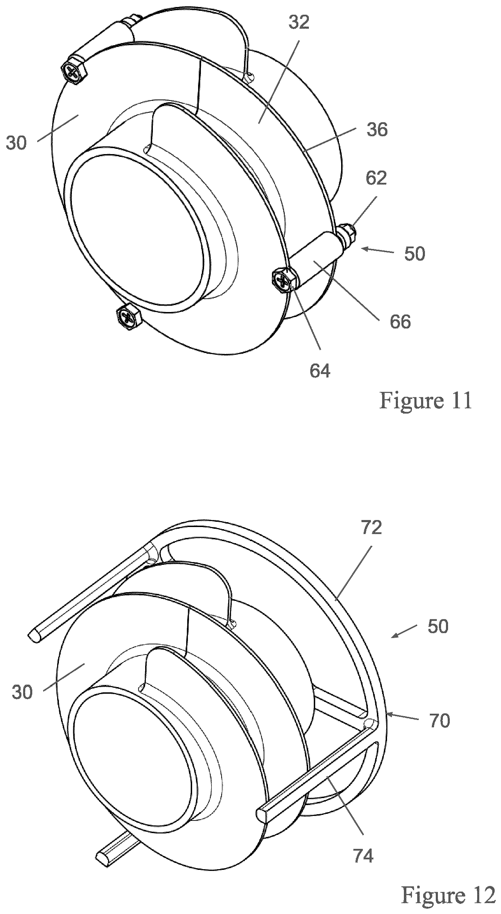

Figure 11 shows a schematic view of an alternative retaining element 50. The retaining element comprises a nut 62, a bolt 64 and a spacing element 66. The spacing element 66 comprises fluorosilicone (although in other examples the spacing element 66 may comprise rubber or any other suitable material). When installed on the harness guide 30, the spacing element 66 is positioned between the walls 36 of the helical channel 32. When the nut 62 and bolt 64 are tightened, this causes an interference fit with the harness guide 30 to hold the retaining element 50 in position. As with the retaining element 50 shown in Figures 9 and 10, the spacing element 66 being made of fluorosilicone means that it is softer than the wiring harness 15 such that if the wiring harness 15 rubs against the spacing element 66, any damage to the wiring harness 15 is minimised. Although three retaining elements 50 are shown in Figure 11, in other examples a greater or lesser number of retaining elements may be used, e.g. one, two, four or five retaining elements 50. In some examples, no retaining elements are used.

Figure 12 shows a schematic view of a further retaining element 50. The retaining element 50 comprises a cage 70 which extends around the harness guide 30. The cage 70 comprises three fingers 74 that extend from a circular base 72. The fingers 74 help to retain the wiring harness 15 within the helical channel 32. Although three fingers 74 are shown in Figure 12, in other examples, a greater or lesser number of fingers 74 may be provided, c.g. one, two, four or five fingers may be provided. The cage 70 comprises an engineering plastic. The fingers 74 of the cage 70 are coated in a fluorosilicone to reduce the likelihood of the cage 70 damaging the wiring harness 15 through contact between the cage 70 and the wiring harness 15. In some examples, the cage 70 may comprise a metallic material.

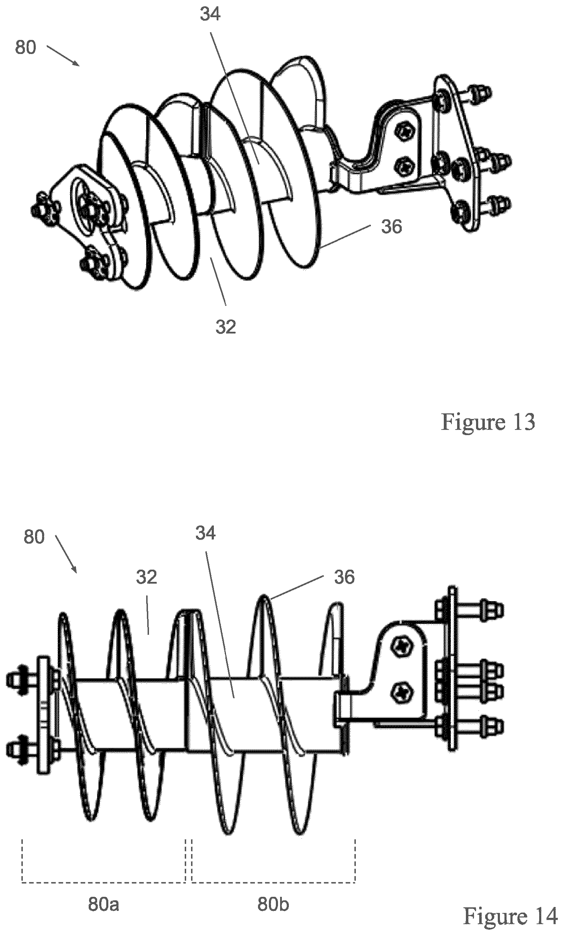

Figure 13 shows an alternative harness guide 80 for use with the wiring harness 15 discussed herein. The harness guide 80 is used in the same way as the harness guide 30 discussed in relation to Figures 3 to 8. The harness guide is shown in an isometric view in Figure 13 and from a side view in Figure 14. As with the previously described harness guide 30, the harness guide 80 comprises a helical channel 32 at an outer circumferential surface 34 of the harness guide 80. The helical channel 32 forms a right-handed helix at the outer circumferential surface 34 of the harness guide 80. The helical channel 32 has a width of approximately 8mm, which is fractionally larger than the cross-sectional diameter of the wiring harness 15 to reduce friction between the wiring harness 15 and the harness guide 80 when the wiring harness 15 grows or retracts within the helical channel 32. In some examples, the helical channel 32 may have a width of between approximately 8mm and 30mm. The helical channel 32 has a depth of approximately 13mm, such that the wiring harness 15 is accommodated within walls 36 of the channel 32. In this way, the walls 36 of the channel 32 cover the wiring harness 15 such that when the wiring harness 15 is in the helical channel 32, the wiring harness 15 does not extend beyond the outer circumferential surface 34 of the harness guide 80. In other examples, the helical channel may have a width of between approximately 13mm and 40mm. The helical channel 32 has a helix angle of approximately 10 degrees.

As can be seen most clearly in Figure 14, the harness guide 80 is split into a first section 80a and a second section 80b. The walls of the first section 80a are shorter than the walls 36 of the second section 80b. In use, a first wiring harness is received in the helical channel 32 that is between the walls 36 of the first section 80a, while a second wiring harness is received in the helical channel 32 between the walls 36 of the second section 80b. While only two wiring harnesses (and two sections of the harness guide 80) are discussed in relation to Figures 13 and 14, in some examples there may also be a third wiring harness and/or a third section of the harness guide 80.

In some alternative examples, the walls 36 of the helical channel 32 are shorter than the diameter of the wiring harness 15. This may reduce the likelihood of debris being trapped between the wiring harness 15 and the walls 36 of the harness guide 80, which may cause damage to the wiring harness 15 or the walls 36.

While in the above examples the wing tip device 11 is rotatable, upwards, from the flight configuration 17 to the ground configuration 19 in which the wing tip device 11 is rotated, to the substantially upright position (shown in Figure 2), it will be appreciated that the invention is equally applicable to arrangements where the wing tip device 11 is rotatable downward relative to the fixed wing 5.

Although the invention has been described above with reference to one or more preferred examples or embodiments, it will be appreciated that various changes or modifications may be made without departing from the scope of the invention as defined in the appended claims.

Although the invention has been described above mainly in the context of a fixed-wing aircraft application, it may also be advantageously applied to various other applications, including but not limited to applications on vehicles such as helicopters, drones, trains, automobiles and spacecraft.

Where the term "or" has been used in the preceding description, this term should be understood to mean "and/or", except where explicitly stated otherwise.

## Claims

1. A wing assembly for an aircraft, the wing assembly comprising:
a fixed wing;
a wing tip device moveably mounted at a joint at an end of the fixed wing, the wing tip device being moveable about the joint between: (i) a flight configuration for use during flight, and (ii) a ground configuration for use during ground-based operations, in which ground configuration the wing tip device is moved relative to the fixed wing such that the span of the wing is reduced,
a wiring harness extending between the fixed wing and the wing tip device, the wiring harness comprising a plurality of conductors and being arranged to transmit electrical power and/or data to the wing tip device; and
a harness guide located between the fixed wing and the wing tip device, the harness guide comprising a helical channel configured to receive the wiring harness and guide the wiring harness between the fixed wing and the wing tip device.

2. The wing assembly according to claim 1, wherein the harness guide is positioned such that a longitudinal axis of the harness guide is coaxial with the joint.

3. The wing assembly according to claim 1, wherein the harness guide is positioned such that a longitudinal axis of the harness guide is offset from the joint.

4. The wing assembly according to any one of claims 1 to 3, wherein the harness guide is fixed in position relative to the fixed wing.

5. The wing assembly according to any one of claims 1 to 3, wherein the harness guide is fixed in position relative to the wing tip device.

6. The wing assembly according to any one of claims 1 to 5, wherein the helical groove extends around an outer circumferential surface of the harness guide.

7. The wing assembly according to any one of claims 1 to 6, wherein the helical channel has a substantially constant cross-sectional shape.

8. The wing assembly according to any one of claims 1 to 7, wherein an outer radius of the harness guide is approximately equal to or less than six times a cross-sectional diameter of the wiring harness.

9. The wing assembly according to any one of claims 1 to 8, wherein the harness guide comprises a retaining element to at least partially retain the harness within the helical channel.

10. The wing assembly according to claim 9, wherein the retaining element comprises a protrusion configured to engage with a corresponding recess of the harness guide.

11. The wing assembly according to claim 9, wherein the retaining element comprises a base and two arms extending perpendicular to the base, and wherein each arm comprises a protrusion to engage with a corresponding recess of the harness guide.

12. The wing assembly according to claim 9, wherein the retaining element comprises a nut, a bolt and a spacing element through which the bolt extends, and wherein the spacing element is configured to engage in a friction fit with the harness guide.

13. The wing assembly according to claim 9, wherein the retaining element comprises a plurality of elongate members that extend around the harness guide.

14. The wing assembly according to any one of claims 10 to 13, wherein the retaining element comprises an insert comprising at least one of rubber or fluorosilicone.

15. An aircraft comprising the aircraft wing assembly according to any one of claims 1 to 14.
